# EUROPEAN PATENT APPLICATION

(11) **EP 4 458 672 A1**
(43) Date of publication of application: **06.11.2024**
(21) Application number: 24171229.8
(22) Date of filing: 19.04.2024
(51) Int. Cl.: B64D 11/00, B64D 11/06, H04N 21/414

(54) **AIRCRAFT IN-FLIGHT ENTERTAINMENT SYSTEM**

(30) Priority: 03.05.2023 US 202318143006
(71) Applicant: Rockwell Collins, Inc., Cedar Rapids, IA 52498 (US)
(72) Inventor: LARA, Oscar Ruiz, Kirkland, WA (US); FINLAY, Travis K., Winston-Salem, NC (US); VANINETTI, Travis J., Bothell, WA (US); ADCOCK, Christopher D., Advance, NC (US)
(74) Representative: Dehns

(57) **Abstract**

An in-flight entertainment, IFE, system (200) may include a structural panel (204) supporting one or more aircraft seat components. The one or more aircraft seat components may include a primary IFE display and a secondary IFE display. Both the primary IFE display and the secondary IFE display may be coupled to a portion of the structural panel (204) facing the passenger. The primary display (206) may receive and display a plurality of in-flight related content from at least one IFE source, while the secondary display (208) may receive and display a plurality of media content associated with a personal electronic device, PED (202), of the passenger. The IFE system may also include at least one controller which is in communication with at least one of the primary IFE display, the secondary IFE display, and the PED. The controller may selectively display content received from at least one of the IFE source or the PED (202).

## Description

### TECHNICAL FIELD

The present invention generally relates to aircraft in-flight entertainment system, and, more particularly, to an aircraft in-flight entertainment system configured to support a personal electronic device.

### BACKGROUND

Many vehicles have begun developing systems for satisfying passenger demand for access to viewing content such as entertainment, information content, or other viewing content, while traveling. Conventional passenger information (or entertainment) systems typically include overhead cabin video systems or seatbased video systems with individual controls.

Further, passenger demand for viewing content is continually evolving. Not only do passengers want to access the most current viewing content, such as live television programming and the latest games, but they also require a more extensive selection of information products and services, such as Internet access and in-transit shopping, to be available. Passengers likewise wish to view their own personally-provided viewing content, such as photo albums and/or music selections, during travel. Conventional passenger information systems are typically limited by their fixed hardware technology and cannot easily be adapted to accommodate changing passenger viewing content and other information preferences.

The increased interest in enhanced aircraft infotainment systems must be balanced with the various aircraft cabin components which are required to meet aircraft guidelines and/or standards when installed within the aircraft cabin.

### SUMMARY

An in-flight entertainment (IFE) system is disclosed, in accordance with one or more embodiments of the present disclosure. In some embodiments, the IFE system may include a structural panel configured to support one or more aircraft seat components. In some embodiments, the IFE system may include a primary display coupled to a portion of the structural panel, where the primary display is configured to receive and display at least a plurality of in-flight content from at least one IFE source. In some embodiments, the IFE system may include a secondary display coupled to a portion of the structural panel, where the secondary display is configured to receive and display at least a plurality of media content associated with a personal electronic device (PED) of a passenger. In some embodiments, the IFE system may include at least one controller in communication with at least one of the primary display, the secondary display, and the PED, where the at least one controller is configured to selectively display content received from at least one of the IFE source and the PED.

A communications system for an aircraft is disclosed, in accordance with one or more embodiments of the present disclosure. In some embodiments, the communications system may include an aircraft in-flight entertainment (IFE) system. In some embodiments, the IFE system may include at least one IFE media content source. In some embodiments, the IFE system may include a primary display configured to display at least a plurality of in-flight media content from the at least one IFE source. In some embodiments, the IFE system may include at least one IFE wireless transceiver configured to communicatively couple the primary display with the at least one IFE media content source. In some embodiments, the IFE system may include at least one personal electronic device (PED) associated with a passenger of the aircraft. In some embodiments, the IFE system may include a secondary display configured to display at least a plurality of media content associated with the PED. In some embodiments, the IFE system may include a PED wireless transceiver configured to communicatively couple the secondary display with the PED. In some embodiments, the IFE system may include at least one controller in communication with at least one of the primary display, the secondary display, the PED wireless transceiver, and the at least one IFE wireless transceiver.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a block diagram depicting an embodiment of an environment for providing an in-flight entertainment (IFE) system, in accordance with one or more embodiments of the present disclosure;
FIG. 2 illustrates a perspective view of an in-flight entertainment (IFE) system integrated within a passenger compartment, in accordance with one or more embodiments of the present disclosure; and
FIGS 3A and 3B illustrate block diagrams depicting embodiments of computing devices used in the IFE system, in accordance with one or more embodiments of the present disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly, embodiments of the inventive concepts disclosed herein are directed to an in-flight entertainment (IFE) system. The system may be integrated within a non-vehicular system or a system which includes a vehicle (e.g., aircraft, watercraft, automobile, train, etc.). In addition, the IFE system may be used in any suitable environment.

Smartphone support in IFE systems is a highly desirable feature, however, it is difficult to implement since it relies on the IFE display which is a very important interface used by airlines to communicate their branding and content to the passengers. Smartphone support has begun integration within IFE systems used in the automotive industry, and it has become a highly sought-out feature by customers who are looking to purchase a new vehicle. Therefore, there is a need to provide smartphone, or other like personal electronic devices (PEDs), integration while minimizing the impact it has on the airline's IFE content.

In some embodiments, the IFE system may be integrated within a passenger compartment located within an aircraft. Further, the IFE system may be integrated within an aircraft seat of the passenger compartment. Aircraft seats installed within an avionics environment may be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), the Society of Automotive Engineers (SAE), or any other standards setting organization or company; the Radio Technical Commission for Aeronautics (RTCA) or any other guidelines agency or organization; or the like.

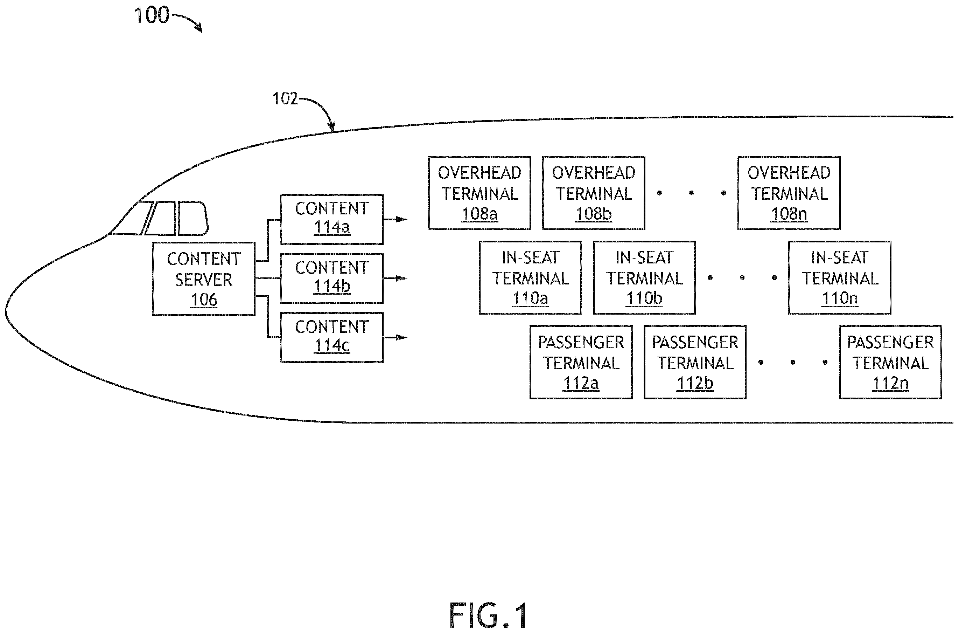

Referring now to FIG. 1, a block diagram depicting an embodiment of an environment 100 for providing an in-flight entertainment (IFE) system 200 is illustrated, in accordance with one or more embodiments of the present disclosure.

In some embodiments, the IFE system 200 may include at least one content server 106 on an airplane 102 which may upload content 114a-114n (e.g., video, audio, or audiovisual) to various types of client terminals for local storage and subsequent playback. The content server 106 may be located or installed at one or more locations of the airplane 102. For example, the content server 106 may be located at a first location within an airplane 102, such as in an electronics/engineering (E/E) bay area, which provides air cooling for the high-speed media server. By way of another example, the content server 106 may be located in an avionics rack in an aircraft avionics bay. In some embodiments, the IFE system 200 may include a content loading component. For example, the content loading component may include a compact interface or module that resides in a second location of the airplane 102, such as a location in the cabin, bulkhead or bag bin region, for accessibility for example. The various types of client terminals may include overhead client terminals, in-seat client terminals with audio and video units, and passenger terminals 112a-112n, or the like. It is noted herein that the content server 106, the one or more overhead terminal 108a-108ns, the one or more in-seat terminals 110a-110n, and/or the one or more passenger terminals 112a-112n may be communicatively coupled to one another.

The one or more overhead terminals 108a-108n, the one or more in-seat terminals 110a-110n, and the one or more passenger terminals 112a-112n may be located in the passenger cabin of the airplane 102. For example, the one or more overhead terminals 108a-108n may be generally located in or toward an upper portion of the passenger cabin above one or more passenger seats. The one or more overhead terminals 108a-108n may include a display unit (e.g., a cathode ray tube monitor, LED display, OLED) affixed to the roof of the passenger cabin and may include an audio unit (e.g., a loudspeaker) located toward the roof of the passenger cabin. The one or more in-seat terminals 110a-110n may be generally located within, by, or at each passenger seat of the passenger cabin. In some embodiments, the one or more in-seat terminals 110a-110n may include at least one of a primary display unit 206 and a secondary display unit 208 (e.g., a cathode ray tube monitor, LED display, OLED) located on a backside of each passenger seat and may include an audio unit (e.g., a plug for earphones or headphones) located on the backside or an armrest of each passenger seat. The one or more passenger terminals 112a-112n may be located anywhere within the passenger cabin 104. In some embodiments, the one or more passenger terminals 112a-112n may include a personal electronic device 202 (PED) (e.g., smartphone, tablet, laptop, or the like) brough onboard the airplane 102 by a user, and may be communicatively coupled to the content server 106 via a wireless access point (WAP). Details of the functionalities regarding the WAP is provided below.

The network connections among the content server 106, the one or more overhead terminals 108a-108n, the one or more in-seat terminals 110a-110n, and the one or more passenger terminals 112a-112n may include any type and/or form of network and may include, but are not limited to, a point-to-point network, a broadcast network, a telecommunications network, a data communication network, a computer network, or the like. The topology of the network may be a bus, star, ring, or other network topology known in the art. The network may be of any such network topology as known to those of ordinary skill in the art capable of supporting the operations described herein. It is noted herein that different types of data may be transmitted via different protocols.

In some embodiments, the passenger compartment 104 may include at least one primary display 206 (e.g., airline IFE display) and at least secondary display 208 (e.g., PED notification display). For example, the at least one primary display 206 may be configured to display content 114a-114n generated through the airline's servers, and the secondary display 208 may be configured to display the passenger's content generated via a personal electronic device (e.g., smart phone, tablet, personal computer, and/or the like). It is noted herein that the content server 106 may send or upload content 114a-114n to each of the displays (e.g., the primary display 206 and the secondary display 208). The content 114a-114n sent via the content server 106 may include audio content, visual content, and/or audio/visual content. In some embodiments, the content 114a-114n may include assets such as video files, audio files, graphic files, portions thereof, or combinations thereof. For example, content including, but not limited to, video content, audio content, menus, schedules, graphics and/or other electronic content may be delivered from the content server 106 to any of the overhead terminals 108a-108n, each of the in-seat terminals 110a-110n, and each of the passenger terminals 112a-112n for use or consumption (e.g., viewing and/or listening) by a user. The content server 106 may provide a variety of content 114a-114n including but not limited to web pages, entertainment guides, video-on-demand, audio-on-demand, near video-on-demand, and digital audio and video broadcasts to a passenger in an aircraft. The content server 106 may provide content 114a-114n on demand, such as movies with or without digital rights management (DRM), television shows, music, and/or electronic books or magazines. The content server 106 may support e-commerce services such as catalog shopping, payment services (e.g., non-real time services, or real time services if connected), or pay per view. It is noted herein that the content server 106 may support advertising or other augmented content 114a-114n (e.g., in connection with delivery of IFE content), which may include one or more of: static images (e.g., in GIF) or advertising videos within movies.

In some embodiments, once the content 114a-114n is received or downloaded, each of the one or more overhead terminals 108a-108n, the one or more in-seat terminals 110a-110n, and/or the one or more passenger terminals 112a-112n may operate independent from one another and from the content server 106. Prior to making the content 114a-114n available to a user or passenger on the aircraft, the content 114a-114n may be loaded to the content server 106 from a content source of storage/transfer device that is not permanently coupled to the content server 106. As an initial step, for example, the content 114a-114n may be loaded or transferred to the content server 106 or a content loading component connected thereto. The content loading component may comprise a high-speed loader and a control panel. The content loading component may include a communications processing board designed to speed up the loading of media content (e.g., 512 GB in minutes) from one or more content sources and/or storage devices to the content server 106, using various interfaces, connectors, devices, and/or communications protocols for the transfer. In some embodiments, the content loading component may support an Ethernet loader, SD cards, SSD and/or USB, for content loading. The content loading component may offer multiple data loading solutions (e.g., USB, Ethernet (e.g., via 1x1000BASE-T 1 Gigabit Ethernet ports), SD cards (e.g., SD, SDHC, SDXC), Wifi/3G/4G to perform media content upload and database update capability. The content loading component may provide high speed loading and/or background content loading. For example, the content loading component may be configured to communicate with at least the storage device and the content server 106. The content loading component may support parallel content loading via multiple interfaces and/or from multiple devices. For example, content stored on multiple SD cards may be loaded in parallel to the content loading component. By way of another example, the content 114a-114n may be loaded in parallel via an Ethernet interface and a USB interface.

The content server 106 may include a service module comprising a high-performance processor, random access memory and a temperature sensor for monitoring heat output and/or controlling cooling mechanism(s). The content server 106 may include one or more storage devices such as solid-state drives, SSD1 and SSD2. In some embodiments, the content server 106 may include, but is not limited to, an Intel i7 quad core processor, 8GB DDR3 RAM, storage for 1.5 TB SSD (3x500 GB/512 GB), power over Ethernet (PoE) power injection, a multiport gigabit (GB) Ethernet switch, aircraft interfaces (e.g., ARINC 429 and discretes), and/or forced air cooling, among other components.

In some embodiments the content server 106 may provide power to the control loading component. The content server 106 may include power over Ethernet (POE) interfaces/connections to the one or more wireless access points (WAPs). The content server 106 may include an Ethernet controller with a Gigabit Ethernet managed L3 switch, for example with a total of ten external ports, and of these ports POE enabled. In some embodiments, the content server 106 may use POE with quad distribution. The content server 106 may support POE corresponding to IEEE 802.3af for instance.

The content server 106 may include interfaces and/or modules for communications using Bluetooth (BT), gigabit Ethernet (GbE), USB and/or GPS channels. In some embodiments, the content server 106 may include a built-in GPS. For example, the content server 106 may include one or more of the following interfaces: Special Discrete Inputs (DSI) (e.g., Weight-on-Wheel, Engine-Off, System Power-On, Cabin "WAP On/Off" command from CCP, Cabin Wifi On/Off command from cockpit); Special Discrete Outputs (DSO) (e.g., 1× DSO WAP Wifi enable, 1× DSO 3G/4G enable/inhibition) (both signals can be connected to CCP); General Purpose DSI (e.g., 12× DSI OPN/GND) (e.g. 1× DSI Passenger Address-ON)+4× DSI 28V/OPN; General Purpose Discrete Outputs (DSO); LED CMD WAP-On; ARINC717 RX Bi Polar/Harvard Bi-Phase; ARINC717 TX Bi Polar/Harvard Bi-Phase (for factory testing only); ARINC429 RX channels; ARINC429 TX channel; RS422 RX/TX channels; Audio input +1× Audio output channels; Gb Power-over-Ethernet ports (IEEE 802.3af) to power up to 5 WAP; Gb Ethernet LAN channels (from FFP-2 to Right TIU, Left TIU, CCP, Spare 1 with Audio voice modulation, Spare 2 and Spare 3); 28V DC Power input channel; 12V DC output Power channels (2× power to L TIU & R TIU+1 × power to CCP); RF channels (1× Iridium ISU 1/GPS signals & 1× Iridium ISU 2 signal); PCIe thru Optical Fiber link to CCP (Tx+Rx channels); CS 3G/4G or WiFi module Antenna output (as provision, if CCP is not connected); and HS 3G/4G or WiFi module Antenna output (as provision, if CCP is not connected). For instance, the 3G/4G and/or WiFi interfaces may be used (e.g., to connect with ground services, using a cellular or WiFi network for communicating data/content) to bypass use of the content loading component (CCP). In certain embodiments, the content server 106 106 may receive signals from the aircraft or public announcement (PA) system, (e.g., to interrupt, pause or stop the provision of IFE related content 114a-114n to one of the client terminals).

In some embodiments, the content server 106 may function as an on-board server for hosting applications software to provide the in-flight entertainment (IFE) functionality and flight related services to an airline customer, such as satellite communication service, control of wireless (e.g., WiFi) cabin performance, synchronization, aircraft data-bus connectivity for reception of flight-data, and/or hosting and execution of EFB and/or IFE applications. The content server 106 may provide system related functionalities such as network security, built-in-test, software and/or database update.

In some embodiments, the content server 106 may provide full aircraft coverage of IFE related services for all passengers. For example, the content server 106 may include appropriate storage capacity for IFE related content 114a-114n and data, (e.g., 1.5 TB of content storage space, which can be scaled, partitioned and/or expanded). The content server 106 can provide reliable AVOD streaming (e.g., at a minimum of 1 megabit per second (Mbps)). The content server 106 can provide an information system for passengers and/or crew, which includes aircraft location or moving map info and updates. The content server 106 can provide support for operating systems of the one or more passenger terminals 112a-112n (e.g., Android, iOS, Windows and MAC OS). In some embodiments, the IFE system 200 and/or content server 106 may be integrated with Aircraft Avionics (e.g., using ARINC 429, Keylines), to provide automated control (e.g., enable or disable) of radio frequency service, and pausing of content 114a-114n during public announcements (PA) transmissions. In some embodiments, the content server 106 may support 2.4 and/or 5 GHz wireless operation, and 802.11n (a/b/g/n) wireless local network service. For example, the content server 106 may support or provide an open platform to allow integration of applications and/or features by third parties.

A WiFi option or capability of the content loading component can allow connection to an airport network as a WiFi client or can be used as a low-cost wireless access point for the one or more passenger terminals 112a-112n. The content loading component may be installed in the video control center (VCC), for example on an A330 aircraft, or an IFE control panel or overhead bin, for example on an A320/A321 aircraft, or other locations of an aircraft. For example, the content loading component of the content server 106 may be installed in an overhead bin area of an aircraft. In some embodiments, the content loading component allows cabin crew to control the cabin's wireless network for the activation/de-activation of WiFi connectivity. The content loading component can provide an interface to initiate maintenance built-in-test (MBIT) and/or display built-in-test status. By way of another example, one embodiment of the content loading component may include one or more of the following interfaces: 1× P/B System ON/OFF (provision only); 1× P/B Cabin Wifi ON/OFF; 1× P/B MBIT request; 1× LAN GbE for external ETH/Ethernet (RJ45); 2× USB3.0 ports & 2× USB port LEDs; 6× SD card slots & 6× SD card slots LEDs; 1× BIT in-progress LED; 1× System health status LED; 1× IFE application health status LED; 1× WAP-On LED; 1× SIM card slot; and 1× CCP Power ON/OFF status LED.

In some embodiments, a number of wireless access points (WAPs) may be installed on at least one structure of the airplane 102. For example, at least one WAP may be installed above the cabin ceiling panel, to distribute content 114a-114n to the one or more overhead terminals 108a-108n, one or more in-seat terminals 110a-110n, and/or the one or more passenger terminals 112a-112n via a wireless Local Area Network (WLAN), which is able to provide full WiFi coverage throughout the cabin area. WiFi-connectivity allows passengers to access media content 114a-114n for inflight streaming (e.g., movies, music, shopping information) from their laptop, tablet and/or other mobile devices. For example, the WAPs can each include a 1×1000BASE-T Gigabit Ethernet port with Power-over-Ethernet (PoE) support. One or more of WAPs can be powered and controlled by the content server 106 main board via Gigabit PoE. The WAPs may support IEEE 802.11 a/b/g/n, IEEE 802.11i (e.g., AES, WEP, WPA, WPA2), IEEE 802.11e, and/or WiFi multimedia (WMM). The WAPs are MIMO capable to handle the harsh multi-path environment 100 in an aircraft. Each WAP may include a dual-radio, dual band, and three-stream 802.11n wireless access point designed for data, voice, and video applications in aircraft deployments. The WAPs are capable of delivering wireless bandwidth to support every client terminal on the airplane 102.

In some embodiments, one or more antennas of the WAPs radiate radio or WiFi signals throughout the aircraft cabin area, which enables passengers to have WiFi connectivity for streaming content via their laptop, smart phones, tablets, or the like. For example, the antennas may be installed in the cabin ceiling panel attached to mounting brackets and the aircraft frame. By way of another example, the WAP Antenna may radiate radio signals of 3.5 dBi Gain at 2.4 Ghz and 4.0 dBi at 5.0 Ghz. In some embodiments, the WiFi signals emitted in the aircraft cabin area may enable passengers to access a WiFi connection in order to stream movies, video, shopping, or the like, while using their laptop, smart phones, tablet, or other personal electronic devices 202 (PEDs).

In some embodiments, the content server 106 may be configured to allow automatic cabin WiFi activation. For example, the cabin WiFi network may be activated when the aircraft reaches an altitude greater than a pre-defined threshold altitude (e.g., 10,000 ft above Mean Sea Level-MSL) and a WAP setting is active. By way of another example, the cabin WiFi network may be configured to activate when all engines of the aircraft are powered-off and the aircraft is on-ground and a WAP setting is active. In some embodiments, the cabin WiFi network may be switched off when the altitude of the aircraft is less than a pre-defined threshold altitude (e.g., 10,000 ft above MSL) and the WAP setting is inactive, or when at least one engine is powered-on and the aircraft is on the ground.

In some embodiments, the content server 106 may be integrated with off-aircraft connectivity, such as air-to-ground, satellite communications (Satcom), Gatelink and/or cellular connectivity. For example, such connectivity may enable the content server 106 to provide at least one of connected applications, passenger Internet, real time payment processing, content loading, system maintenance, and/or ground services. The content server 106 may be operably coupled with a single or dual Iridium antenna on top of the aircraft fuselage for satellite communication via Iridium satellite network and/or other networks.

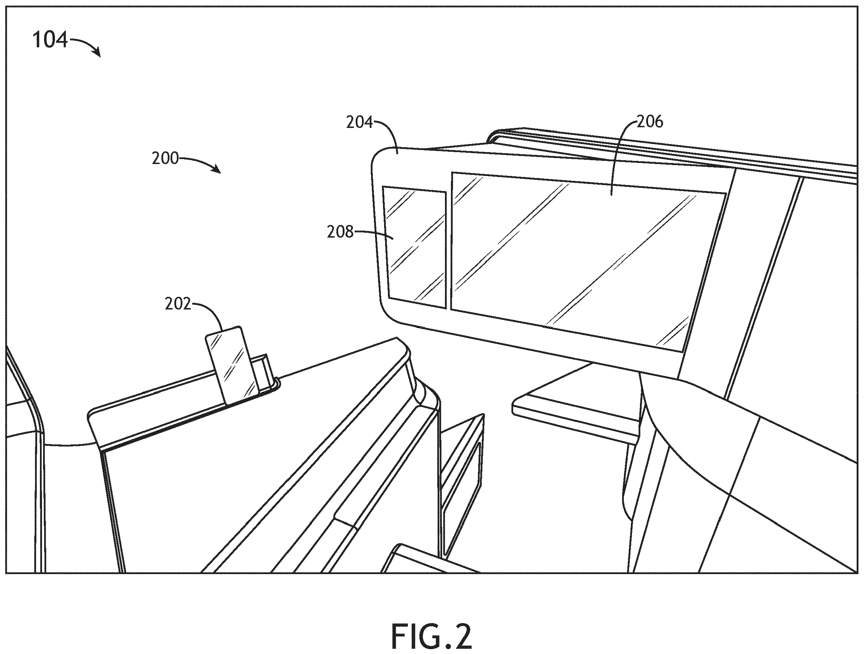

Referring now to FIG. 2, a perspective view of an in-flight entertainment (IFE) system 200 integrated within a passenger compartment 104 is illustrated, in accordance with one or more embodiments of the present disclosure.

In some embodiments the passenger compartment 104 may include aircraft seats 104, rows, or the like, in a passenger cabin of an aircraft or any other vehicle. The aircraft seats 104 may include a traditional economy style seat, a divan, a suite-style seat, a seat with reclinable features, a bed-style seat, a couch-style seat, or any other aircraft seating style known in the art. In an exemplary embodiment, the system 200 is incorporated into an aircraft seat 104 (e.g., a business-class or elite-class compartment) aboard a commercial aircraft or like seating area aboard a business jet or luxury aircraft.

The passenger compartment 104 may include a privacy shell. The privacy shell may include an opening into the passenger compartment 104. The passenger compartment 104 may include a door for entering the privacy shell. The passenger compartment 104 may also include any form of entry into the privacy shell that is known in the art. The passenger compartment 104 may include an aircraft seat 104 configured to fit within a privacy shell. The passenger compartment 104 may also be configured to fit one or more aircraft seats 104 within the privacy shell. For example, the aircraft seat 104 may be configured to fit within the privacy shell when transitioning between positions (e.g., between an upright position and a bed position). In some embodiments, the aircraft seat 104 may also include one or more armrests or armrest consoles adjacent to (e.g., on a left or right side) of the lower body support members.

In some embodiments, the passenger compartment 104 may include a structural panel 204, a primary in-flight entertainment display 206 and a secondary display 208 (e.g., adjustably installed on the wall or the like), a user interface, and a personal electronic device 202 (PED), some or all of which may be communicatively coupled with each other or the content server 106 at any given time. The structural panel 204 may be configured to support at least one of the primary IFE display 206 or the secondary IFE display 208. For example, the primary IFE display 206 and the secondary IFE display 208 may be positioned on a portion of the structural panel 204 that is configured to pivot about an axis associated with the structural panel 204. The structural panel 204 may be configured to pivot such that the IFE displays face the aircraft seat.

In some embodiments, the PED 202 is configured to selectively control the media content which is displayed on at least one of the primary IFE display 206 or the secondary IFE display 208. For example, the primary IFE display 206 may be configured to display the plurality of airline media content 114a-114n which is received via the content server 106. By way of another example, the secondary IFE display 208 may be configured to display the passenger's media content which is received via the PED 202. In some embodiments, the PED 202 may be configured to stream media content to at least one of the primary or secondary IFE displays 206 and 208 while allowing the passenger to use other applications associated with the PED 202. In some embodiments, the primary IFE display 206 may be larger than the secondary IFE display 208. For example, the secondary IFE display 208 may be utilized for passengers to visualize notifications received by the PED 202.

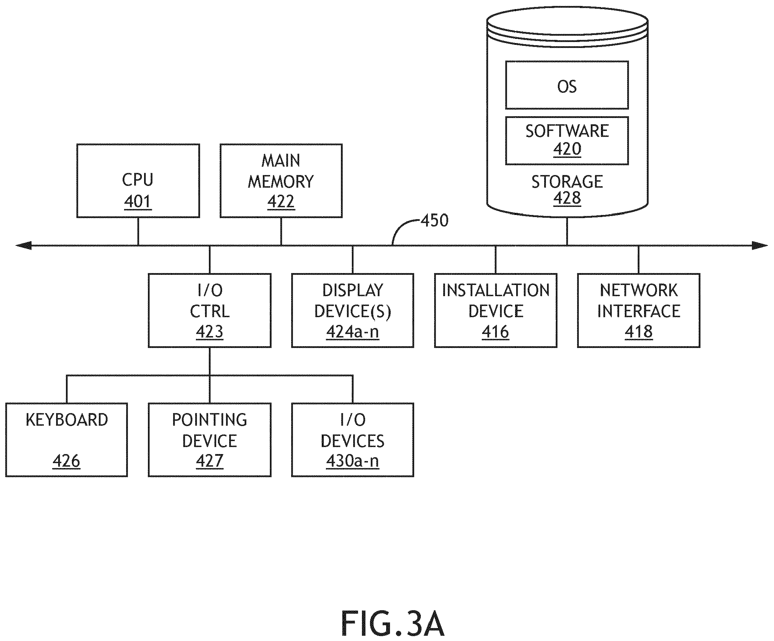

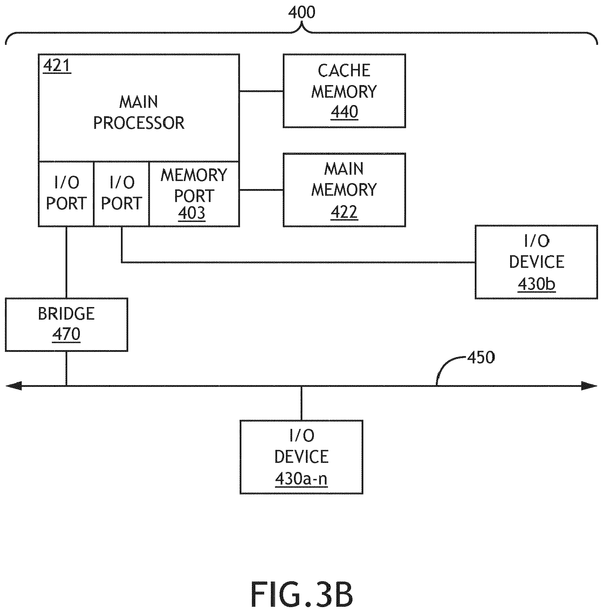

The content server 106, the one or more overhead terminals 108a-108n, the one or more in-seat terminals 110a-110n, and the one or more passenger terminals 112a-112n may be deployed as and/or executed on any type and form of computing device, such as a computer, network device or appliance capable of communicating on any type and form of network and performing the operations described herein. FIGS. 3A and 3B depict block diagrams of a computing device 400 useful for practicing an embodiment of the content server 106, the one or more overhead terminals 108a-108n, the one or more in-seat terminals 110a-110n, and the one or more passenger terminals 112a-112n. As shown in FIGS. 3A and 3B, each computing device 400 includes a processor 421, and a main memory unit 422. As shown in FIG. 3A, a computing device 400 may include a storage device 128, an installation device 416, a network interface 418, an I/O controller 423, display devices 424a-424n, and/or a keyboard 426 and a pointing device 427, such as a mouse. The storage device 128 may include, but is not limited to, an operating system and/or software. As shown in FIG. 4B, each computing device 400 may also include optional elements, such as a memory port 403, a bridge 470, one or more input/output devices 430a-430n (generally referred to using reference numeral 430), and a cache memory 440 in communication with the central processing unit 421.

In some embodiments, the processor 421 may include any logic circuitry that responds to and processes instructions fetched from the main memory unit 422. The processor 421 may sometimes be referred to as a microprocessor or central processing unit. The processor 421 may include, for example, a single or multi-core processor, digital signal processor, field programmable gate array (FPGA) device, application specific integrated circuit (ASIC), or combinations thereof. The computing device 400 may be based on one of more of these processors, or any other processor capable of operating as described herein.

In some embodiments, the main memory unit 422 may include one or more memory chips capable of storing data and allowing any storage location to be directly accessible via the processor 421, such as any type or variant of Static random-access memory (SRAM), Dynamic random access memory (DRAM), Ferroelectric RAM (FRAM), NAND Flash, NOR Flash and Solid State Drives (SSD). The main memory 422 may be based on any of the memory chips, or any other available memory chips capable of operating in the ways described herein. As shown in FIG. 4A, the processor 421 may be configured to communicate with main memory 422 via a system bus 450 (described in more detail below). As shown in FIG. 4B, a computing device 400 may include a processor 421 which may be configured to communicate directly with main memory 422 via a memory port 403. For example, in FIG. 4B the main memory 422 may include a DRDRAM.

FIG. 4B depicts an embodiment in which the processor 421 communicates directly with cache memory 440 via a secondary bus, sometimes referred to as a backside bus. In some embodiments, the processor 421 communicates with cache memory 440 using the system bus 450. Cache memory 440 typically has a faster response time than main memory 422 and is provided by, for example, SRAM, BSRAM, or EDRAM. The processor 421 may communicate with various I/O devices 430 via a local system bus 450. Various buses can be used to connect the processor 421 to any of the I/O devices 430, for example, a VESA VL bus, an ISA bus, an EISA bus, a MicroChannel Architecture (MCA) bus, a PCI bus, a PCI-X bus, a PCI-Express bus, or a NuBus. In some embodiments, in which the I/O device is a video display 424, the processor 421 may use an Advanced Graphics Port (AGP) to communicate with the display 424. FIG. 4B depicts an embodiment of a computer 400 in which the processor 421 can communicate directly with an I/O device 430b, for example via HYPERTRANSPORT, RAPIDIO, or INFINIBAND communications technology. In some embodiments, local busses and direct communication may be mixed. For example, the processor 421 communicates with I/O device 430a using a local interconnect bus while communicating with the I/O device 430b directly.

In some embodiments, a wide variety of I/O devices 430a-430n may be present in the computing device 400. For example, input devices may include keyboards, mice, trackpads, trackballs, microphones, dials, touch pads, touch screen, drawing tablets, and/or the like. By way of another example, output devices may include video displays, speakers, inkjet printers, laser printers, projectors, dye-sublimation printers, and/or the like. The I/O devices may be controlled via an I/O controller 423, as shown in FIG. 4A. The I/O controller can control one or more I/O devices such as a keyboard 426 and a pointing device 427 (e.g., a mouse or optical pen). Further, an I/O device may also provide storage and/or an installation medium 416 for the computing device 400. In some embodiments, the computing device 400 may provide USB connections (not shown) to receive handheld USB storage devices such as the USB Flash Drive line of devices manufactured by Twintech Industry, Inc. of Los Alamitos, Calif.

Referring again to FIG. 4A, the computing device 400 may support any suitable installation device 416, such as a disk drive, a CD-ROM drive, a CD-R/RW drive, a DVD-ROM drive, a flash memory drive, secure digital (SD) device, tape drives of various formats, USB device, hard-drive, a network interface, or any other device suitable for installing software and programs. The computing device 400 may further include a storage device, such as one or more hard disk drives or redundant arrays of independent disks, for storing an operating system and other related software, and for storing application software programs such as any program or software 420 for implementing (e.g., built and/or designed for) the systems and methods described herein. It is noted herein that any of the installation devices 416 could also be used as the storage device. Additionally, the operating system and the software may be run from a bootable medium.

In some embodiments, the computing device 400 may include a network interface 418 to interface to the network through a variety of connections including, but not limited to, standard telephone lines, LAN or WAN links (e.g., 802.11, satellite), broadband connections (e.g., Frame Relay, Gigabit Ethernet), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, WiMax and direct asynchronous connections). In some embodiments, the computing device 400 may be configured to communicate with other computing devices 400 via any type and/or form of gateway or tunneling protocol such as Secure Socket Layer (SSL) or Transport Layer Security (TLS). The network interface 418 may include a built-in network adapter, network interface card, peripheral connection interconnect express (PCIe) adaptor, PCMCIA network card, card bus network adapter, wireless network adapter, USB network adapter, modem or any other device suitable for interfacing the computing device 400 with any type of network or device capable of communication and performing the operations described herein.

In some embodiments, the computing device 400 may include or be connected to one or more display devices 424a-424n. As such, any of the I/O devices 430a-430n and/or the I/O controller 423 can include any type and/or form of suitable hardware, software, or combination of hardware and software to support, enable or provide for the connection and use of the display device(s) 424a-424n by the computing device 400. For example, the computing device 400 can include any type and/or form of video adapter, video card, driver, and/or library to interface, communicate, connect or otherwise use a display device 424.

In some embodiments, an I/O device 430 may include a bridge between the system bus 450 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a Serial Attached small computer system interface bus, a USB connection, or an HDMI bus.

The computing device 400, depicted in FIGS. 4A and 4B, may operate under the control of an operating system, which controls scheduling of tasks and access to system resources. For example, the computing device 400 may run any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems may include, but are not limited to: Android, produced by Google Inc.; WINDOWS 7, 8 and 10, produced by Microsoft Corporation of Redmond, Wash.; MAC OS, produced by Apple Computer of Cupertino, Calif.; and Linux, a freely-available operating system distributed by Caldera Corp. of Salt Lake City, Utah, or any type and/or form of a Unix operating system, among others.

In some embodiments, the computer system 400 may be configured as a workstation, telephone, desktop computer, laptop or notebook computer, server, handheld computer, mobile telephone or other portable telecommunications device, media playing device, media storing device, media loading device, a gaming system, mobile computing device, or any other type and/or form of computing, telecommunications or media device that is capable of communication. The computer system 400 has sufficient processor power and memory capacity to perform the operations described herein.

In some embodiments, the computing device 400 may have different processors, operating systems, and input devices consistent with the device. For example, in one embodiment, the computing device 400 is a smart phone, mobile device, tablet or personal digital assistant. By way of another example, the computing device 400 is an Android-based mobile device, an iPhone smart phone manufactured by Apple Computer of Cupertino, Calif. By way of another example, the computing device 400 may be configured as any workstation, desktop computer, laptop or notebook computer, server, handheld computer, mobile telephone, any other computer, or other form of computing or telecommunications device that is capable of communication and that has sufficient processor power and memory capacity to perform the operations described herein.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as nonlimiting examples unless otherwise specified in the claims.

## Claims

1. An in-flight entertainment, IFE, system (200), comprising:
a structural panel (204) configured to support one or more aircraft seat components;
a primary display (206) coupled to a portion of the structural panel (204), wherein the primary display (206) is configured to receive and display at least a plurality of in-flight content from at least one IFE source;
a secondary display (208) coupled to a portion of the structural panel (204), wherein the secondary display (208) is configured to receive and display at least a plurality of media content associated with a personal electronic device, PED (202), of a passenger;
at least one controller in communication with at least one of the primary display (206), the secondary display (208), and the PED (202), wherein the at least one controller is configured to selectively display content received from at least one of the IFE source and the PED (202).

2. The system of Claim 1, wherein both of the primary display (206) and the secondary display (208) are configured to receive at least the plurality of media content associated with the PED (202).

3. The system of Claim 1 or 2, wherein both of the primary display (206) and the secondary display (208) are configured to receive and display at least the plurality of in-flight content from the at least one IFE source.

4. The system of any preceding Claim, wherein the PED (202) is configured to selectively control the displayed media content on at least one of the primary display (206) or the secondary display (208).

5. The system of any preceding Claim, wherein the portion of the structural panel (204) used to support at least one of the primary display (206) or the secondary display (208) is configured to pivot about an axis associated with the structural panel (204).

6. The system of any preceding Claim, wherein the secondary display (208) is configured to display the plurality of media content associated with the PED (202) and the primary display (206) is configured to display the plurality of in-flight content simultaneously.

7. The system of any preceding Claim, wherein at least one of the primary display (206) and the secondary display (208) are configured to mirror the visual PED media content.

8. The system of any preceding Claim, wherein at least one of the primary display (206) and the secondary display (208) may be configured to simultaneously display the PED media content while the passenger uses other applications associated with the PED (202).

9. The system of any preceding Claim, wherein the one or more components of the aircraft seat include at least one of an in-flight entertainment system, and one or more storage compartments.

10. The system of any preceding Claim, further comprising a seat power supply system, wherein the seat power supply system includes a seat power source configured to independently provide power to at least the IFE system.

11. A communications system for an aircraft, comprising:
an aircraft in-flight entertainment, IFE, system, comprising:
at least one IFE media content source;
a primary display (206) configured to display at least a plurality of inflight media content from the at least one IFE source;
at least one IFE wireless transceiver configured to communicatively couple the primary display (206) with the at least one IFE media content source;
at least one personal electronic device, PED (202), associated with a passenger of the aircraft;
a secondary display (208) configured to display at least a plurality of media content associated with the PED (202);
a PED wireless transceiver configured to communicatively couple the secondary display (208) with the PED; and
at least one controller in communication with at least one of the primary display (206), the secondary display (208), the PED wireless transceiver, and the at least one IFE wireless transceiver.

12. The system of Claim 11, wherein both of the primary display (206) and the secondary display (208) are configured to receive at least the plurality of media content associated with the PED (202).

13. The system of Claim 11 or 12, wherein both of the primary display (206) and the secondary display (208) are configured to receive and display at least the plurality of in-flight content from the at least one IFE source.

14. The system of any of Claims 11-13, wherein the PED (202) is configured to selectively control the displayed media content on at least one of the primary display (206) or the secondary display (208).

15. The system of any of Claims 11-14, wherein the portion of the structural panel (204) used to support at least one of the primary display (206) or the secondary display (208) is configured to pivot about an axis associated with the structural panel (204); or
wherein the secondary display (208) is configured to display the plurality of media content associated with the PED (202) and the primary display (206) is configured to display the plurality of in-flight content simultaneously; and/or
wherein at least one of the primary display (206) and the secondary display (208) are configured to mirror the visual PED media content; and/or
wherein at least one of the primary display (206) and the secondary display (208) may be configured to simultaneously display the PED media content while the passenger uses other applications associated with the PED (202); and/or
wherein the one or more components of the aircraft seat include at least one of an in-flight entertainment system, and one or more storage compartments; and/or
further comprising a seat power supply system, wherein the seat power supply system includes a seat power source configured to independently provide power to at least the IFE system.
